# EUROPEAN PATENT SPECIFICATION

(11) **EP 3 994 207 B1**
(45) Date of publication and mention of the grant of the patent: **09.08.2023**
(21) Application number: 20735177.6
(22) Date of filing: 30.06.2020
(51) Int. Cl.: C08K 5/01

(54) **HNBR VULCANISATES CONTAINING POLYCYCLIC AROMATIC HYDROCARBONS**
HNBR-VULKANISATE MIT POLYCYCLISCHEN AROMATISCHEN KOHLENWASSERSTOFFEN
VULCANISATS HNBR CONTENANT DES HYDROCARBURES AROMATIQUES POLYCYCLIQUES

(30) Priority: 02.07.2019 EP 19183937
(43) Date of publication of application: 11.05.2022
(73) Proprietor: ARLANXEO Deutschland GmbH, 41540 Dormagen (DE)
(72) Inventor: LIEBER, Susanna, 67663 Kaiserslautern (DE); DAVID, Sarah, 41539 Dormagen (DE)
(86) International application number: PCT/EP2020/068345
(87) International publication number: WO 2021/001343

(56) References cited:
- WO-A1-2017/217203
- US-A1- 2007 135 579
- US-A1- 2011 112 213

## Description

### Field of Invention

The present invention relates to vulcanisates comprising at least one vulcanised hydrogenated nitrile rubber (HNBR) and at least one polycyclic aromatic hydrocarbon (PAH). The invention further relates to uses of the vulcanisates in automotive components.

### Background of Invention

Hydrogenated nitrile rubber (HNBR) is a synthetic hydrogenated rubber copolymer of acrylonitrile and butadiene. HNBR is generally resistant to oil and exhibits properties over a broad temperature range. HNBR can be used in automotive applications such as belts, gaskets and hoses.

HNBR is considered to be free of polycyclic aromatic hydrocarbons (PAH), (EMG Report June 2017, page 20, table 2).

International patent application publication No. WO 2010/012531 A1 and WO 2012/084377 A1 both disclose the use of rubber compositions for belts and hoses comprising a softener. The softener is free of polycyclic aromatics according to Directive 76/769/EEC.

International patent application publication No. WO 2011/128122 A2 discloses drive belts with a main body made of a polymeric material, for e.g. HNBR. The drive belts are free of PAH.

European patent application publication No. EP3327073 A1 discloses polymeric articles containing carbon black as a reinforcing filler or at least a pigment. The carbon black contains a high proportions of PAH.

International patent application publication No. WO 2017/217203 A1 discloses rubber compositions comprising a hydrogenated carboxyl-containing nitrile rubber (HXNBR), 0.5 to 5 phr of aminated PAH having 3 or more fused rings, e.g. 2-aminoanthracene, 1-aminopyrene, 1,6-diamino-9-pyrene and 3-amino-9-ethylcarbazole. WO 2017/217203 fails to disclose the effect of the aminated PAH on HXNBR components.

However, the HNBR vulcanisates from the prior art lack satisfactorily balanced stability of tensile stress and exhibit undesirable elongation at break. The HNBR vulcanisates from the prior art also exhibit undesirable retention of hardness due to ageing.

There is therefore a need to overcome at least some of the aforementioned problems associated with the HBNR from the prior art.

There is a need to provide HNBR vulcanisates that have an improved low hardness profile after ageing, change only moderately in terms of tensile stress and elongation at break.

### Summary of Invention

The aforementioned problems are at least overcome by the present invention.

It has been found that, surprisingly, these problems are solved by **HNBR vulcanisates comprising polycyclic aromatic hydrocarbons (PAHs)** that have a low hardness and have only a moderate deterioration in tensile stress and in elongation at break on ageing. In a first aspect the present invention relates to a vulcanisate comprising:
(a) 100 parts by weight of at least one vulcanised hydrogenated nitrile rubber (HNBR) and
(b) 1 part by weight to less than 12 parts by weight of at least one polycyclic aromatic hydrocarbon (PAH).

In a further aspect the present invention relates to a use of the vulcanisate as an automotive component in contact with an organic medium.

### Detailed Description

For a complete understanding of the present invention and the advantages thereof, reference is made to the following detailed description.

In a first aspect the present invention relates to a vulcanisate comprising:
(a) 100 parts by weight of at least one vulcanised hydrogenated nitrile rubber (HNBR) and
(b) 1 part by weight to less than 12 parts by weight of at least one polycyclic aromatic hydrocarbon (PAH).

Nitrile Rubbers (NBR) refers to rubber copolymers of at least one α,β-unsaturated nitrile unit and at least one conjugated diene unit. The nitrile rubbers may further comprise at least one copolymerisable monomer.

Hydrogenated nitrile rubbers (HNBR) refers to the corresponding NBR in which a degree of hydrogenation of C=C double bonds of the at least one conjugated diene.

Vulcanised hydrogenated nitrile rubber is understood to mean a HNBR that has been vulcanised by methods known in the art. Suitable vulcanisation methods are specified hereinafter.

Copolymer refers to polymers having more than one monomer unit. Terpolymers refers to polymers having three monomer units.

The HNBR has a degree of hydrogenation in a range of 50% - 100%, preferably 90% - 100%, more preferably 95% - 100% and most preferably 99% - 100%.

HNBR copolymer refers to a copolymer comprising at least one α,β-ethytenicatty unsaturated nitrile monomer unit, at least one conjugated diene monomer unit and further monomer units. The degree of a degree of hydrogenation of the HNBR copolymer can be as those described.

The at least one α,β-unsaturated nitrile unit can be provided by known α,β-ethytenicatty unsaturated nitriles, or mixtures thereof, for example (C₃-C₅)-α,β-ethylenically unsaturated nitrile (acrylonitrile), α-haloacrylonitrile (α-chloroacrylonitrile and α-bromoacrylonitrile), α-alkylacrylonitrile (methacrylonitrile, ethacrylonitrile). It is preferred that the at least one α,β-unsaturated nitrile unit is provided by acrylonitrile, methacrylonitrile, ethacrylonitrile or mixtures thereof. It is most preferred that the at least one α,β-unsaturated nitrile unit is provided by acrylonitrile.

An amount of the at least one α,β-ethytenicatty unsaturated nitrile monomer units may be in a range of 10 - 60 wt%, preferably 20 - 50 wt%, more preferably 30 - 45 wt%, based on a total amount of 100% by weight of all monomer units in the hydrogenated nitrile rubber (a).

The at least one conjugated diene unit can be provided by known dienes, or mixtures thereof, for example C₄-C₁₂ dienes (1,3-butadiene, isoprene, 2,3-dimethylbutadiene, 1,3-pentadiene). It is preferred that at least one conjugated diene unit is provided by 1,3-butadiene and isoprene. It is most preferred that the at least one conjugated diene unit is provided by 1,3-Butadiene.

An amount of the at least one conjugated diene units may be in a range of 40 - 90 wt%, preferably 50 - 80 wt% and more preferably 55 - 70 wt%, based on the total amount of 100 wt% by weight of all the monomer units in the hydrogenated nitrile rubber (a).

In a preferred embodiment, the at least one α,β-ethytenicatty unsaturated nitrile monomer units are provide by acrylonitrile or methacrylonitrile, more preferably from acrylonitrile and the at least one conjugated diene unit is provided by isoprene or 1,3-butadiene, more preferably from 1,3-butadiene.

The hydrogenated nitrile rubber may contain one or more further monomer units derived from copolymerizable monomers in an amount of 0 - 50 wt%, preferably 0.1 - 40 wt%, more preferably 0.5 - 30 wt% and most preferably 1-10 wt% by weight, based on the total amount of 100 wt% of all monomer units. In that case, the amounts of the other monomer units are reduced in a suitable manner, such that the sum total of all monomer units is always 100 wt%.

The further monomer units derived from copolymerizable monomers used may be provided by carboxyl-containing copolymerizable monomers, for example α,β-unsaturated (mono)carboxylic acids or esters thereof, α,β-unsaturated dicarboxylic acids or mono- or diesters thereof, or the corresponding anhydrides or amides thereof.

The α,β-unsaturated (mono)carboxylic acids may be selected from acrylic acid and methacrylic acid.

The α,β-unsaturated dicarboxylic acids may be selected from maleic acid, fumaric acid, crotonic acid, itaconic acid, citraconic acid and mesaconic acid.

The α,β-unsaturated dicarboxylic anhydrides may be selected from maleic anhydride, itaconic anhydride, citraconic anhydride and mesaconic anhydride.

A preferred hydrogenated nitrile rubber according to the present invention may comprise of the following, the at least one α,β-ethytenicatty unsaturated nitrile monomer units are provided by acrylonitrile or methacrylonitrile, the at least one conjugated diene unit is provided by isoprene or 1,3-butadiene and the further monomer units derived from copolymerizable monomers is provided by acrylic acid or methacrylic acid.

The α,β unsaturated (mono)carboxylic esters may be selected from:
- alkyl (meth)acrylate, especially C₄-C₁₈-alkyl (meth)acrylate, preferably n-butyl, tert-butyl, n-pentyl or n-hexyl (meth)acrylate;
- alkoxyalkyl (meth)acrylate, especially C₄-C₁₈-alkoxyalkyl (meth)acrylate, preferably C₄-C₁₂-alkoxyalkyl (meth)acrylate, more preferably methoxyethyl (meth)acrylate;
- hydroxyalkyl (meth)acrylate, especially C₄-C₁₈-hydroxyalkyl (meth)acrylate, preferably C₄-C₁₂-hydroxyalkyl (meth)acrylate;
- cycloalkyl (meth)acrylate, especially C₅-C₁₈-cycloalkyl (meth)acrylate, preferably C₆-C₁₂-cycloalkyl (meth)acrylate, more preferably cyclopentyl (meth)acrylate, cyclohexyl (meth)acrylate, cycloheptyl (meth)acrylate;
- alkylcycloalkyl (meth)acrylate, especially C₆-C₁₂-alkylcycloalkyl (meth)acrylate, preferably C₇-C₁₀-alkylcycloalkyl (meth)acrylate, more preferably methylcyclopentyl (meth)acrylate and ethylcyclohexyl (meth)acrylate;
- aryl monoesters, especially C₆-C₁₄-aryl monoesters, preferably phenyl (meth)acrylate or benzyl(meth)acrylate;
- amino-containing α,β-ethylenically unsaturated carboxylic esters, for example dimethylaminomethyl acrylate or diethylaminoethyl acrylate;

The α,β-unsaturated (mono)carboxylic esters include α,β- unsaturated monoalkyl dicarboxylates, selected from:
- alkyl, especially C₄-C₁₈-alkyl, preferably n-butyl, tert-butyl, n-pentyl or n-hexyl, more preferably mono-n-butyl maleate, mono-n-butyl fumarate, mono-n-butyl citraconate, mono-n-butyl itaconate, most preferably mono-n-butyl maleate,
- alkoxyalkyl, especially C₄-C₁₈-alkoxyalkyl, preferably C₄-C₁₂-alkoxyalkyl,
- hydroxyalkyl, especially C₄-C₁₈-hydroxyalkyl, preferably C₄-C₁₂-hydroxyalkyl,
- cycloalkyl, especially C₅-C₁₈-cycloalkyl, preferably C₆-C₁₂-cycloalkyl, more preferably monocyclopentyl maleate, monocyclohexyl maleate, monocycloheptyl maleate, monocyclopentyl fumarate, monocyclohexyl fumarate, monocycloheptyl fumarate, monocyclopentyl citraconate, monocyclohexyl citraconate, monocycloheptyl citraconate, monocyclopentyl itaconate, monocyclohexyl itaconate and monocycloheptyl itaconate,
- alkylcycloalkyl, especially C₆-C₁₂-alkylcycloalkyl, preferably C₇-C₁₀-alkylcycloalkyl, more preferably monomethylcyclopentyl maleate and monoethylcyclohexyl maleate, monomethylcyclopentyl fumarate and monoethylcyclohexyl fumarate, monomethylcyclopentyl citraconate and monoethylcyclohexyl citraconate; monomethylcyclopentyl itaconate and monoethylcyclohexyl itaconate;
- aryl monoesters, especially C₆-C₁₄-aryl monoesters, preferably monoaryl maleates, monoaryl fumarates, monoaryl citraconates or monoaryl itaconates, more preferably monophenyl maleate or monobenzyl maleate, monophenyl fumarate or monobenzyl fumarate, monophenyl citraconate or monobenzyl citraconate, monophenyl itaconate or monobenzyl itaconate,
- unsaturated polyalkyl polycarboxylates, for example dimethyl maleate, dimethyl fumarate, dimethyl itaconate or diethyl itaconate;

A preferred hydrogenated nitrile rubber according to the present invention may comprise of the following, the at least one α,β-ethylenically unsaturated nitrile monomer units are provided by acrylonitrile or methacrylonitrile, more preferably from acrylonitrile, the at least one conjugated diene unit is provided by isoprene or 1,3-butadiene, more preferably from 1,3-butadiene, the further monomer units derived from copolymerizable monomers is provided by alkyl acrylates or alkyl methacrylates, preferably C₁-C₄-alkyl (meth)acrylate, more preferably butyl acrylate.

The further monomer units derived from copolymerizable monomers are Polyethylene Glycol (PEG) acrylate units derived from a PEG acrylate according to the general formula (I): 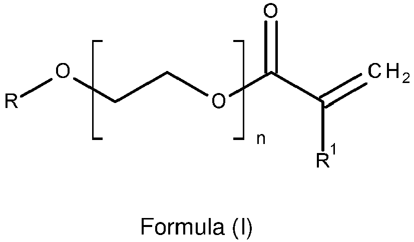 where
R ₌ hydrogen or branched or unbranched C₁-C₂₀-alkyl, preferably C₂-C₂₀-Alkyl, more preferably ethyl, butyl or ethylhexyl,
n ₌ 1 to 12, preferably 2 to 8, more preferably 2 to 5 and most preferably 2 or 3 and
R¹ ₌ hydrogen or CH₃-.

Preferred PEG acrylate monomer units are derived from the PEG acrylates of the following formulae No. 1 - No. 8, where n ₌ 1, 2, 3, 4, 5, 6, 7, 8, 9, 10, 11 or 12, preferably 2, 3, 4, 5, 6, 7 or 8, more preferably 2, 3, 4 or 5 and most preferably 2 or 3:

| | |
|---|---|
| Ethoxy polyethylene glycol acrylate | 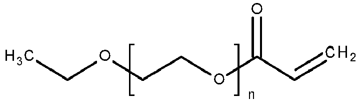 |
| (formula No. 1) | |
| Ethoxy polyethylene glycol methacrylate | 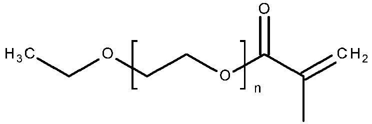 |
| (formula No. 2) | |
| Propoxy polyethylene glycol acrylate | 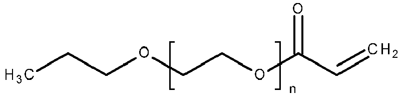 |
| (formula No. 3) | |
| Propoxy polyethylene glycol methacrylate | 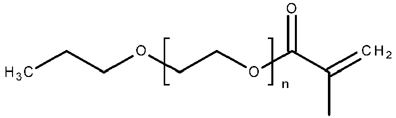 |
| (formula No. 4) | |
| Butoxy polyethylene glycol acrylate | 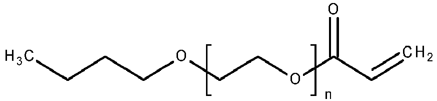 |
| (formula No. 5) | |
| Butoxy polyethylene glycol methacrylate | 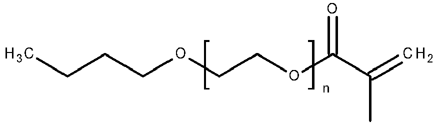 |
| (formula No. 6) | |
| Ethylhexyloxy polyethylene glycol acrylate | 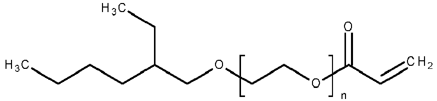 |
| (formula No. 7) | |
| Ethylhexyloxy polyethylene glycol methacrylate | 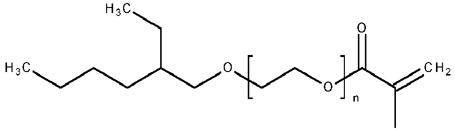 |
| (formula No. 8) | |

These PEG acrylates can be purchased commercially, for example from Arkema under the Sartomer^{®} trade name, from Evonik under the Visiomer^{®} trade name or from Sigma Aldrich.

An amount of the PEG acrylate monomer units may be in a range from 0 - 50 wt%, preferably 15 - 50 wt% and more preferably 20 - 50 wt%, based on the total amount of 100 wt% of all the monomer units.

A preferred hydrogenated nitrile rubber according to the present invention may comprise of the following, the at least one α,β-ethylenically unsaturated nitrile monomer units are provided by acrylonitrile or methacrylonitrile, more preferably from acrylonitrile, the conjugated diene monomer unit is derived from isoprene or 1,3-butadiene, more preferably from 1,3-butadiene, and the further monomer unit is derived from PEG acrylate of the general formula (I) where n is 2 to 8, more preferably from PEG acrylate of the general formula (I) where n is 2 or 3.

The further monomer units derived from copolymerisable monomers used may be provided by:
- aromatic vinyl monomers, preferably styrene, α-methylstyrene and vinylpyridine,
- fluorine-containing vinyl monomers, preferably fluoroethyl vinyl ether, fluoropropyl vinyl ether, o-fluoromethylstyrene, vinyl pentafluorobenzoate, difluoroethylene and tetrafluoroethylene, or else
- α-olefins, preferably C₂-C₁₂ olefins, for example ethylene, 1-butene, 4-butene, 4-methyl-1-pentene, 1-hexene or 1-octene,
- non-conjugated dienes, preferably C₄-C₁₂ dienes such as 1,4-pentadiene, 1,4-hexadiene, 4-cyanocyclohexene, 4-vinylcyclohexene, vinylnorbornene, dicyclopentadiene or else
- alkynes such as 1- or 2-butyne,
- copolymerizable antioxidants, for example N-(4-anilinophenyl)acrylamide, N-(4-anilinophenyl)methacrylamide, N-(4-anilinophenyl)cinnamide, N-(4-anilinophenyl)crotonamide, N-phenyl-4-(3-vinylbenzyloxy)aniline, N-phenyl-4-(4-vinylbenzyloxy)aniline
- cross linkable monomers, for example divinyl components such as divinylbenzene for example.

A preferred hydrogenated nitrile rubber according to the present invention may comprise of the following:
- 20 - 45 wt% of acrylonitrile monomer units,
- 30 - 70 wt% of 1,3-butadiene monomer units
- 10 - 25 wt% of PEG-2 acrylate monomer units or PEG-3 acrylate monomer units.

A preferred hydrogenated nitrile rubber according to the present invention may comprise of the following:
- 20 - 45 wt% of the at least one α,β-ethylenically unsaturated nitrile monomer units, preferably acrylonitrile
- 30 - 70 wt% of the at least one conjugated diene, preferably 1,3-butadiene
- 10 - 25 wt% of PEG acrylate monomer unit, preferably ethoxy triethylene glycol methacrylate or butoxy diethylene glycol methacrylate.

The hydrogenated nitrile rubber typically has a number-average molecular weight (Mn) of 10 000 - 2 000 000 g/mol, preferably 50 000 - 1 000 000 g/mol, more preferably 100 000 - 500 000 g/mol and most preferably 150 000 - 300 000 g/mol.

The hydrogenated nitrile rubber typically has a polydispersity index (PDI = M_{w}/Mₙ where M_{w} is the weight-average molecular weight) in a range of 1.5 - 6, preferably 2 - 5 and more preferably 2.5 - 4.

The hydrogenated nitrile rubber typically has a Mooney viscosity (ML1+4@100°C) in a range of 10 - 150, preferably 20 - 120 and more preferably of 25 - 100.

The hydrogenated nitrile rubber according to the present invention are manufactured according to methods known in the art. The method comprises a provision of the nitrile butly rubber components of the at least one α,β-unsaturated nitrile unit, the at least one conjugated diene unit and optionally the at least one copolymerisable monomer as mentioned above which are then polymerised to form the nitrile butyl rubber. This is followed by a hydrogenation of the corresponding nitrile butyl rubber for the hydrogenated nitrile rubber.

The NBR may be subjected to metathesis (as disclosed in WO-A-02/100941 and WO-A-02/100905) to reduce the molecular weight of the NBR prior to hydrogenation.

Polycyclic aromatic hydrocarbons (PAH) refers to fused organic aromatic rings (at least two aromatic rings). The PAH may be substituted or unsubstituted.

The PAH can be selected from at least one of naphthalene, acenaphthylene, acenaphthene, fluorene, phenalene, anthracene, phenanthrene, fluoranthene, pyrene, tetracene, chrysene, perylene, benzo[a]anthracene, benzo[b]fluoranthene, benzo[j]fluoranthene, benzo[k]fluoranthene, benzo[a]pyrene, dibenzo[a,h]anthracene, benzo[c]fluorene, indeno[*1,2,3-cd*]pyrene, benzo[ghi]perylene, pentacene, pentaphene, coronene, corannulene, ovalene, hexacene, heptaphene, heptacene, triphenylene, trinaphthylene and superphenalene, or any mixtures thereof.

It is preferred that the PAH is selected from anthracene and phenanthrene.

It is further preferred that the PAH is non-aminated when the H(X)NBR comprises acidic groups, since the amines (when present) of the PAH can react with HNBR acidic groups forming amides and bring about an unwanted increase in hardness.

The vulcanisates according to the present invention have a low hardness and a moderate change in elongation at break (EB) on hot air ageing.

Where the vulcanisates according to the present invention have less than 1 part by weight of polycyclic aromatic hydrocarbons show a low hardness but a distinct deterioration in elongation at break (EB) on hot air ageing.

Where the vulcanisates according to the present invention have 12 or more parts by weight of polycyclic aromatic hydrocarbons have a moderate change in elongation at break on hot air ageing, but have high hardness. Vulcanisates with high hardness are more difficult to process and therefore not suitable for all applications.

The vulcanisate may comprise at least one further additive. The further additive can include: polymers not covered by hydrogenated nitrile rubber per se, fillers, filler-activators, oils, especially processing oils, mineral oils or extender oils, plasticizers, , accelerators, multifunctional crosslinkers, ageing stabilizers, reversion stabilizers, light stabilizers, antiozonants, antioxidants, mould release agents, retarders, tackifiers, blowing agents, stabilizers, dyes, pigments, waxes, resins, extenders, fillers, for example barium sulfate, titanium dioxide, zinc oxide, calcium oxide, calcium carbonate, magnesium oxide, aluminium oxide, iron oxide, aluminium hydroxide, magnesium hydroxide, aluminosilicates, diatomaceous earth, talc, kaolins, bentonites, carbon nanotubes, graphene, synthetic graphite, Teflon (the latter preferably in powder form), silicates, carbon blacks, silicas, pyrogenic silica, silica, silanized silica, natural products, for example alumina, kaolins, wollastonite, organic acids, vulcanisation retarders, metal oxides, fibres comprising organic and inorganic fibres made of glass, cords, fabric, fibres made of aliphatic and aromatic polyamides (Nylon^{®}, Aramid^{®}), polyesters and natural fibre products, and also fibre pulps, vulcanisation activators, additional polymerizable monomers, dimers, trimers or oligomers, salts of unsaturated carboxylic acids, for example zinc diacrylate (ZDA), zinc methacrylates (ZMA) and zinc dimethacrylate (ZDMA), liquid acrylates or other additives known in the rubber industry (Ullmann's Encyclopedia of Industrial Chemistry, VCH Verlagsgesellschaft mbH, D-69451 Weinheim, 1993, vol A 23 "Chemicals and Additives", p. 366-417).

Useful filler-activators include organic silanes, for example vinyltrimethyloxysilane, vinyldimethoxymethylsilane, vinyltriethoxysilane, vinyltris(2-methoxyethoxy)silane, N-cyclohexyl-3-aminopropyltrimethoxysilane, 3-aminopropyltrimethoxysilane, methyltrimethoxysilane, methyltriethoxysilane, dimethyldimethoxysilane, dimethyldiethoxysilane, trimethylethoxysilane, isooctyltrimethoxysilane, isooctyltriethoxysilane, hexadecyltrimethoxysilane or (octadecyl)methyldimethoxysilane. Further filler-activators are, for example, interface-active substances such as triethanolamine or ethylene glycols with molecular weights of 74 to 10 000 g/mol. The amount of filler-activators is typically 0 to 10 parts by weight, based on 100 parts by weight of the hydrogenated nitrile rubber (a).

Useful ageing stabilizers are especially those which scavenge a minimum number of radicals in the peroxidic vulcanisation. These are especially oligomerized 2,2,4-trimethyl-1,2-dihydroquinoline (TMQ), styrenized diphenylamine (DDA), octylated diphenylamine (OCD), cumylated diphenylamine (CDPA), 4- and 5-methylmercaptobenzimidazole (MB2) or zinc salt of 4- and 5-methylmercaptobenzimidazole (ZMB2). In addition, it is also possible to use the known phenolic ageing stabilizers, such as sterically hindered phenols, or ageing stabilizers based on phenylenediamine. It is also possible to use combinations of the ageing stabilizers mentioned, preferably CDPA in combination with ZMB2 or MB2, more preferably CDPA with MB2.

The ageing stabilizers are typically used in amounts of 0.1 to 5 parts by weight, preferably of 0.3 to 3 parts by weight, based on 100 parts by weight of the hydrogenated nitrile rubber.

Examples of useful mould release agents include: saturated or partly unsaturated fatty acids and oleic acids or derivatives thereof (in the form of fatty acid esters, fatty acid salts, fatty alcohols or fatty acid amides), and also products applicable to the mould surface, for example products based on low molecular weight silicone compounds, products based on fluoropolymers and products based on phenolic resins.

The mould release agents are used as blend component in amounts of 0.2 to 10 parts by weight, preferably 0.5 to 5 parts by weight, based on 100 parts by weight of the hydrogenated nitrile rubber (a).

Reinforcement of the vulcanisates with glass strength members according to the teaching of US-A-4,826,721 is also possible, as is reinforcement with aromatic polyamides (aramid).

The vulcanisates of the present invention are manufactured by vulcanisation, preferably in a shaping method, of a vulcanisable composition comprising the at least one hydrogenated nitrile rubber and at least one crosslinking agent, preferably at least one peroxidic crosslinking agent. The vulcanisation can either be effected in the presence of the at least one polycyclic aromatic hydrocarbon (b) or the at least one polycyclic aromatic hydrocarbon (b) is added after the vulcanisation/or to the vulcanisate.

The peroxidic crosslinking agent is preferably an organic peroxide, more preferably dicumyl peroxide, tert-butyl cumyl peroxide, di(tert-butylperoxyisopropyl)benzene, di-tert-butyl peroxide, 2,5-dimethylhexane 2,5-dihydroperoxide, 2,5-dimethylhex-3-yne 2,5-dihydroperoxide, dibenzoyl peroxide, bis(2,4-dichlorobenzoyl) peroxide, tert-butyl perbenzoate, butyl 4,4-di(tert-butylperoxy)valerate and/or 1,1-bis(tert-butylperoxy)-3,3,5-trimethylcyclohexane, and most preferably di(tert-butylperoxyisopropyl)benzene.

The vulcanisation is preferably effected at temperatures in a range of 100 - 250°C, more preferably 120 - 250°C and most preferably 130 - 250°C. For this purpose, the vulcanisable compositions are subjected to further processing with calendars, rolls or extruders. The pre-shaped mass is then vulcanised in presses, autoclaves, hot air systems or what are called automatic mat vulcanisation systems ("Auma").

A vulcanisation time is typically 1 minute to 24 hours and preferably 2 minutes to 1 hour. Depending on the shape and size of the vulcanisates, a second vulcanisation by reheating may be necessary in order to achieve complete vulcanisation.

The vulcanisates of the present invention is a retention of low hardness and in the tensile stress and elongation at break on ageing.

In a further aspect the present invention relates to a use of the aforementioned vulcanisate as an automotive component in contact with an organic medium.

The automotive component cab be at least one of a belt, a gasket or a hose.

The organic medium is selected from at least one of an oil or a fuel.

The present invention is demonstrated by the following non-limiting examples.

### Examples

### Materials used

(a) HNBR 1 hydrogenated nitrile rubber (HNBR) with 39% by weight of acrylonitrile (ACN) and 61% by weight of butadiene (BD); Mooney viscosity: 70; residual double bond content: ≤ 0.9; commercially available as Therban^{®} 3907 from ARLANXEO
(a) HNBR 2 hydrogenated nitrile rubber (HNBR) with 30.7% by weight of acrylonitrile (ACN) and 14.6% by weight of ethoxy triethylene glycol methacrylate (PEG3) and 54.7% by weight of butadiene (BD)
(b) phenanthrene CAS No.: 85-01-8 (Sigma Aldrich)
   Perkadox^{®} 14-40 di(tert-butylperoxyisopropyl)benzene 40% supported on silica, available from Akzo Nobel Polymer Chemicals BV
   Corax^{®} N330 ASTM carbon black; available from Orion Engineered Carbon
   Rhenofit^{®} DDA-70 70% styrenized diphenylamine bound to 30% silica; available from Lanxess Deutschland GmbH
   Vulkanox^{®} ZMB2 4- and 5-methyl-2-mercaptobenzimidazole; available from Lanxess Deutschland GmbH
   Maglite^{®} MgO magnesium oxide, available from CP Hall
   TAlC 70% KETTLITZ-TAIC 70; coagent; available from Kettlitz-Chemie GmbH & Co. KG

### Test methods

### Crosslinking characteristics (MDR)

The MDR (moving die rheometer) vulcanisation profile and analytical data associated therewith were measured in a Monsanto MDR 2000 rheometer in accordance with ASTM D5289-95.

### Hardness measurement (H)

Shore A hardness was measured with a durometer in accordance with ASTM-D2240-81.

### Elongation at break (EB) and tensile strength (TS)

Elongation at break and tensile strength of the vulcanisates are measured on S2 specimens according to DIN 53504 at room temperature.

**Table 1: Vulcanisable HNBR compositions**

| | **V1** | **V2*** | **V3*** | **V4** | **V5*** | **V6** |
|---|---|---|---|---|---|---|
| **(a) HNBR 1** | 100 | 100 | 100 | 100 | | |
| **(a) HNBR 2** | | | | | 100 | 100 |
| **(b) Phenanthrene** | 0 | 1 | 3 | 12 | 3 | 12 |
| **N330** | 30 | 30 | 30 | 30 | 30 | 30 |
| **Rhenofit^{®} DDA-70** | 1.4 | 1.4 | 1.4 | 1.4 | 1.4 | 1.4 |
| **Vulkanox^{®} ZMB2** | 0.4 | 0.4 | 0.4 | 0.4 | 0.4 | 0.4 |
| **Maglite^{®} MgO** | 2 | 2 | 2 | 2 | 2 | 2 |
| **TAIC** | 1.5 | 1.5 | 1.5 | 1.5 | 1.5 | 1.5 |
| **Perkadox^{®} 14-40** | 7 | 7 | 7 | 7 | 7 | 7 |

| | | | | | | |
|---|---|---|---|---|---|---|
| *inventive | | | | | | |

The vulcanisable mixture was vulcanised at 180°C for 15 min in a press.

**Table 2: Crosslinking characteristics (MDR 180°C 20 min S16)**

| | | **V1** | **V2*** | **V3*** | **V4** | **V5*** | **V6** |
|---|---|---|---|---|---|---|---|
| S' min | dNm | 0.76 | 0.98 | 0.84 | 0.39 | 1.68 | 1.01 |
| S' max | dNm | 19.24 | 17.58 | 18.01 | 11.67 | 17.48 | 11.79 |
| Delta S' | dNm | 18.48 | 16.6 | 17.17 | 11.28 | 15.8 | 10.78 |
| TS 1 | s | 34 | 34.2 | 34 | 43 | 33 | 40 |
| TS 2 | s | 43 | 44.4 | 44 | 59 | 43 | 56 |
| t 50 | s | 115 | 120.15 | 121 | 128 | 111 | 117 |
| t 90 | s | 319 | 343.2 | 332 | 340 | 295 | 304 |
| t 95 | s | 408 | 444.3 | 421 | 426 | 372 | 379 |
| S'@t 90 | dNm | 17.39 | 15.92 | 16.29 | 10.54 | 15.9 | 10.71 |
| t@S'max | s | 972 | 1017 | 880 | 860 | 730 | 733 |
| tan D of end value | | 0.05 | 0.05 | 0.05 | 0.06 | 0.03 | 0.04 |

| | | | | | | | |
|---|---|---|---|---|---|---|---|
| S' min is the minimum torque of the crosslinking isotherm S' max is the maximum torque of the crosslinking isotherm Delta S' difference of S'max and S'min t50: time at which 50% of the final conversion has been attained t90: time at which 90% of the final conversion has been attained t95: time at which 95% of the final conversion has been attained | | | | | | | |

**Table 3: Properties of the unaged vulcanisates (measured at room temperature)**

| | | **V1** | **V2*** | **V3*** | **V4** | **V5*** | **V6** |
|---|---|---|---|---|---|---|---|
| Hardness | ShA | 63 | 62 | 62 | 89 | 60 | 81 |
| M10 | MPa | 0.6 | 0.6 | 0.5 | 3.4 | 0.5 | 2 |
| M25 | MPa | 1 | 1 | 0.9 | 3.7 | 0.9 | 2.6 |
| M50 | MPa | 1.4 | 1.5 | 1.4 | 3.9 | 1.4 | 3 |
| M100 | MPa | 2.7 | 2.7 | 2.7 | 5.6 | 3.2 | 4.8 |
| M300 | MPa | 26.1 | 24.3 | 24.4 | 24.5 | -- | 21.3 |
| EB | % | 362 | 336 | 343 | 428 | 260 | 330 |
| TS | MPa | 31 | 32 | 30 | 36 | 21 | 23 |

Vulcanisates V4 and V6, i.e. the vulcanisates with the highest amounts of PAH of 12 parts by weight, have very particularly high hardnesses. Such high hardnesses of more than 80 ShA are unwanted since this complicates processibility.

**Table 4: Properties of the aged vulcanisates (hot air ageing; 150°C); measured at room temperature**

| | | **V1** | **V2*** | **V3*** | **V4** | **V5*** | **V6** |
|---|---|---|---|---|---|---|---|
| **Hot air ageing** | | **21 days; 150°C** | | | | **7 days; 150°C** | |
| Hardnes s | ShA | 74 | 74 | 74 | 75 | 71 | 70 |
| ΔH | ShA | 11 | 12 | 12 | -14 | 11 | -11 |
| M10 | MPa | 5.3 | 0.9 | 0.9 | 0.9 | 0.7 | 0.7 |
| M25 | MPa | 8.5 | 1.7 | 1.6 | 1.6 | 1.4 | 1.3 |
| M50 | MPa | 13.4 | 2.9 | 2.7 | 2.6 | 2.4 | 2.1 |
| M100 | MPa | 25 | 6.9 | 6.3 | 5.4 | 5.7 | 4.4 |
| M300 | MPa | - | - | -- | 28.3 | -- | 25 |
| EB | % | 111 | 243 | 245 | 329 | 218 | 301 |
| TS | MPa | 27.6 | 27.2 | 26.9 | 30.8 | 20.7 | 24.7 |
| ΔEB | % | -67 | -33 | -29 | -23 | -16 | -9 |
| ΔTS | % | -12.4 | -11 | -10 | -15 | -2 | 6 |

Vulcanisates V1, V2, V3 and V5 have an expected moderate rise in hardness, although the ultimate hardness value is still within an acceptable margin.

Vulcanisate V4, after ageing (hot air) for 21 days, completely surprisingly has an unexpected **decrease in hardness.** Vulcanisate V6, after ageing (hot air) for 7 days, likewise has an unexpected decrease in hardness. A decrease in hardness is particularly unfavourable since the HNBR vulcanisate becomes softer and hence loses sealing power when used as a gasket, for example, and therefore becomes unusable.

The effect of PAH values of 1 part by weight or more is that elongation at break deteriorates only moderately on ageing. Vulcanisate V1 without PAH, by contrast, has disadvantageous deteriorations in elongation at break that make practical use of such a vulcanisate impossible.

## Claims

1. A vulcanisate comprising:
(a) 100 parts by weight of at least one vulcanised hydrogenated nitrile rubber (HNBR), and
(b) 1 part by weight to less than 12 parts by weight of at least one polycyclic aromatic hydrocarbon (PAH).

2. The vulcanisate according to Claim 1, wherein the amount of polycyclic aromatic hydrocarbons (b) is 1 part by weight to 10 parts by weight, based on 100 parts by weight of vulcanised hydrogenated nitrile rubber (a).

3. The vulcanisate according to anyone of the above claims, wherein the amount of polycyclic aromatic hydrocarbons (b) is 2 parts by weight to 5 parts by weight, based on 100 parts by weight of vulcanised hydrogenated nitrile rubber (a).

4. The vulcanisate according any one of the above claims, wherein the at least one polycyclic aromatic hydrocarbon is selected from the at least one of naphthalene, acenaphthylene, acenaphthene, fluorene, phenalene, anthracene, phenanthrene, fluoranthene, pyrene, tetracene, chrysene, perylene, benzo[a]anthracene, benzo[b]fluoranthene, benzo[j]fluoranthene, benzo[k]fluoranthene, benzo[a]pyrene, dibenzo[a,h]anthracene, benzo[c]fluorene, indeno[1,2,3-cd]pyrene, benzo[ghi]perylene, pentacene, pentaphene, coronene, corannulene, ovalene, hexacene, heptaphene, heptacene, triphenylene, trinaphthylene and superphenalene, preferably anthracene and phenanthrene or any combination thereof.

5. The vulcanisate according to anyone of the above claims, wherein the vulcanised hydrogenated nitrile rubber (a) has, as monomer units, α,β-ethytenicatty unsaturated nitrile monomer units, conjugated diene units and optionally one or more further monomer units.

6. The vulcanisate according to Claim 5, wherein an amount of α,β-ethytenicatty unsaturated nitrile monomer units in the vulcanised hydrogenated nitrile rubber (a) is in a range 10 - 60 wt%, preferably 20- 50 wt%, more preferably 30 - 45 wt%, based on the total amount of all monomer units in the vulcanised hydrogenated nitrile rubber (a).

7. The vulcanisate according to Claim 5 or 6, wherein the amount of conjugated diene units in the vulcanised hydrogenated nitrile rubber (a) is 40 - 90 wt%, preferably 50 - 80 wt%, more preferably 55 - 70 wt%, based on the total amount of all monomer units in the vulcanised hydrogenated nitrile rubber (a).

8. The vulcanisate according to anyone of Claims 5 to 7, wherein the vulcanised hydrogenated nitrile rubber comprises at least one of, as one or more further monomer units, carboxylic acid units, carboxylic ester units, dicarboxylic monoester units, PEG acrylate units or mixtures thereof.

9. The vulcanisate according to any of Claims 4 to 7, wherein an amount of further monomer units in the vulcanised hydrogenated nitrile rubber (a) is 0 - 50 wt%, preferably 0.1 - 40 wt%, more preferably 0.5 - 30 wt% and most preferably 1 - 10 wt%, based on the total amount of all monomer units in the vulcanised hydrogenated nitrile rubber (a).

10. A use of the vulcanisate according to anyone of the above Claims as an automotive component in contact with an organic medium.

11. The use according to Claim 10, wherein the automotive component is selected from at least one of a belt, a gasket or a hose.

12. The use according to any one of Claims 10 - 11, wherein the organic medium is selected from at least one of an oil or a fuel.

## Patentansprüche

1. Vulkanisat, umfassend:
(a) 100 Gewichtsteile mindestens eines vulkanisierten hydrierten Nitrilkautschuks (HNBR) und
(b) 1 Gewichtsteil bis weniger als 12 Gewichtsteile mindestens eines polycyclischen aromatischen Kohlenwasserstoffs (PAH).

2. Vulkanisat nach Anspruch 1, wobei die Menge an polycyclischen aromatischen Kohlenwasserstoffen (b) 1 Gewichtsteil bis 10 Gewichtsteile, bezogen auf 100 Gewichtsteile vulkanisierten hydrierten Nitrilkautschuk (a), beträgt.

3. Vulkanisat nach einem der obigen Ansprüche, wobei die Menge an polycyclischen aromatischen Kohlenwasserstoffen (b) 2 Gewichtsteile bis 5 Gewichtsteile, bezogen auf 100 Gewichtsteile vulkanisierten hydrierten Nitrilkautschuk (a), beträgt.

4. Vulkanisat nach einem der obigen Ansprüche, wobei der mindestens eine polycyclische aromatische Kohlenwasserstoff aus mindestens einem von Naphthalin, Acenaphthylen, Acenaphthen, Fluoren, Phenalen, Anthracen, Phenanthren, Fluoranthren, Pyren, Tetracen, Chrysen, Perylen, Benzo[a]-anthracen, Benzo[b]fluoranthren, Benzo[j]-fluoranthren, Benzo[k]fluoranthren, Benzo[a]pyren, Dibenzo[a,h]anthracen, Benzo[c]fluoren, Indeno[1,2,3-cd]pyren, Benzo[ghi]perylen, Pentacen, Pentaphen, Coronen, Corannulen, Ovalen, Hexacen, Heptaphen, Heptacen, Triphenylen, Trinaphthylen und Superphenalen, vorzugsweise Anthracen und Phenanthren, oder einer beliebigen Kombination davon ausgewählt ist.

5. Vulkanisat nach einem der obigen Ansprüche, wobei der vulkanisierte hydrierte Nitrilkautschuk (a) als Monomereinheiten a,β-ethylenisch ungesättigte Nitril-Monomereinheiten, konjugierte Dieneinheiten und gegebenenfalls eine oder mehrere weitere Monomereinheiten aufweist.

6. Vulkanisat nach Anspruch 5, wobei eine Menge von a,β-ethylenisch ungesättigten Nitril-Monomereinheiten in dem vulkanisierten hydrierten Nitrilkautschuk (a) in einem Bereich von 10-60 Gew.- %, vorzugsweise 20-50 Gew.-%, weiter bevorzugt 30-45 Gew.-%, bezogen auf die Gesamtmenge aller Monomereinheiten in dem vulkanisierten hydrierten Nitrilkautschuk (a), liegt.

7. Vulkanisat nach Anspruch 5 oder 6, wobei die Menge von konjugierten Dieneinheiten in dem vulkanisierten hydrierten Nitrilkautschuk (a) 40-90 Gew.-%, vorzugsweise 50-80 Gew.-%, weiter bevorzugt 55-70 Gew.-%, bezogen auf die Gesamtmenge aller Monomereinheiten in dem vulkanisierten hydrierten Nitrilkautschuk (a), beträgt.

8. Vulkanisat nach einem der Ansprüche 5 bis 7, wobei der vulkanisierte hydrierte Nitrilkautschuk als eine oder mehrere weitere Monomereinheiten mindestens eines von Carbonsäure-Einheiten, Carbonsäureester-Einheiten, Dicarbonsäuremonoester-Einheiten, PEG-Acrylat-Einheiten oder Mischungen davon umfasst.

9. Vulkanisat nach einem der Ansprüche 4 bis 7, wobei eine Menge von weiteren Monomereinheiten in dem vulkanisierten hydrierten Nitrilkautschuk (a) 0-50 Gew.-%, vorzugsweise 0,1-40 Gew.-%, weiter bevorzugt 0,5-30 Gew.-% und ganz besonders bevorzugt 1-10 Gew.-%, bezogen auf die Gesamtmenge aller Monomereinheiten in dem vulkanisierten hydrierten Nitrilkautschuk (a), beträgt.

10. Verwendung des Vulkanisats nach einem der obigen Ansprüche als Automobilbauteil in Kontakt mit einem organischen Medium.

11. Verwendung nach Anspruch 10, wobei das Automobilbauteil aus mindestens einem von einem Riemen, einer Dichtung oder einem Schlauch ausgewählt ist.

12. Verwendung nach einem der Ansprüche 10-11, wobei das organische Medium aus mindestens einem von einem Öl oder einem Kraftstoff ausgewählt ist.

## Revendications

1. Vulcanisat comprenant :
(a) 100 parties en poids d'au moins un caoutchouc de nitrile hydrogéné vulcanisé (HNBR), et
(b) 1 partie en poids à moins de 12 parties en poids d'au moins un hydrocarbure aromatique polycyclique (PAH).

2. Vulcanisat selon la revendication 1, la quantité d'hydrocarbures aromatiques polycycliques (b) étant de 1 partie en poids à 10 parties en poids, sur la base de 100 parties en poids de caoutchouc de nitrile hydrogéné vulcanisé (a).

3. Vulcanisat selon l'une quelconque des revendications ci-dessus, la quantité d'hydrocarbures aromatiques polycycliques (b) étant de 2 parties en poids à 5 parties en poids, sur la base de 100 parties en poids de caoutchouc de nitrile hydrogéné vulcanisé (a).

4. Vulcanisat selon l'une quelconque des revendications ci-dessus, l'au moins un hydrocarbure aromatique polycyclique étant choisi parmi l'au moins un parmi le naphtalène, l'acénaphtylène, l'acénaphtène, le fluorène, le phénalène, l'anthracène, le phénanthrène, le fluoranthène, le pyrène, le tétracène, le chrysène, le pérylène, le benzo[a]anthracène, le benzo[b]fluoranthène, le benzo[j]fluoranthène, le benzo[k]fluoranthène, le benzo[a]pyrène, le dibenzo[a,h]anthracène, le benzo[c]fluorène, le indéno[1,2,3-cd]pyrène, le benzo[ghi]pérylène, le pentacène, le pentaphène, le coronène, le corannulène, l'ovalène, l'hexacène, l'heptaphène, l'heptacène, le triphénylène, le trinaphtylène et le superphénalène, préférablement l'anthracène et le phénanthrène ou toute combinaison correspondante.

5. Vulcanisat selon l'une quelconque des revendications ci-dessus, le caoutchouc de nitrile hydrogéné vulcanisé (a) ayant, comme motifs monomériques, des motifs monomériques de nitrile éthyléniquement a,β-insaturé, des motifs de diène conjugué et éventuellement un ou plusieurs autres motifs monomériques.

6. Vulcanisat selon la revendication 5, une quantité de motifs monomériques de nitrile éthyléniquement α,β-insaturé dans le caoutchouc de nitrile hydrogéné vulcanisé (a) étant dans une plage de 10 à 60 % en poids, préférablement 20 à 50 % en poids, plus préférablement 30 à 45 % en poids, sur la base de la quantité totale de tous les motifs monomériques dans le caoutchouc de nitrile hydrogéné vulcanisé (a) .

7. Vulcanisat selon la revendication 5 ou 6, la quantité de motifs de diène conjugué dans le caoutchouc de nitrile hydrogéné vulcanisé (a) étant de 40 à 90 % en poids, préférablement 50 à 80 % en poids, plus préférablement 55 à 70 % en poids, sur la base de la quantité totale de tous les motifs monomériques dans le caoutchouc de nitrile hydrogéné vulcanisé (a).

8. Vulcanisat selon l'une quelconque des revendications 5 à 7, le caoutchouc de nitrile hydrogéné vulcanisé comprenant au moins l'un parmi, comme un ou plusieurs autres motifs monomériques, des motifs d'acide carboxylique, des motifs d'ester carboxylique, des motifs de monoester dicarboxylique, des motifs d'acrylate de PEG ou des mélanges correspondants.

9. Vulcanisat selon l'une quelconque des revendications 4 à 7, une quantité d'autres motifs monomériques dans le caoutchouc de nitrile hydrogéné vulcanisé (a) étant de 0 à 50 % en poids, préférablement 0,1 à 40 % en poids, plus préférablement 0,5 à 30 % en poids et le plus préférablement 1 à 10 % en poids, sur la base de la quantité totale de tous les motifs monomériques dans le caoutchouc de nitrile hydrogéné vulcanisé (a).

10. Utilisation du vulcanisat selon l'une quelconque des revendications ci-dessus comme composant automobile en contact avec un milieu organique.

11. Utilisation selon la revendication 10, le composant automobile étant choisi parmi au moins l'un parmi une courroie, un joint ou un tuyau flexible.

12. Utilisation selon l'une quelconque des revendications 10 et 11, le milieu organique étant choisi parmi au moins l'un parmi une huile ou un carburant.
